# EUROPEAN PATENT APPLICATION

(11) **EP 3 540 416 A2**
(43) Date of publication of application: **18.09.2019**
(21) Application number: 19162703.3
(22) Date of filing: 14.03.2019
(51) Int. Cl.: G01N 23/04

(54) **X-RAY UTILIZED COMPOUND MEASURING APPARATUS**

(30) Priority: 15.03.2018 JP 2018047823
(71) Applicant: Earthnix-M, Inc., Chiyoda-ku Tokyo 101-0021 (JP)
(72) Inventor: UCHIDA, Hiroshi, Tokyo (JP); EMURA, Takashi, Tokyo (JP); OGAWA, Junichi, Tokyo (JP); NAKANISHI, Ryusuke, Tokyo (JP)
(74) Representative: Strehl Schübel-Hopf & Partner

(57) **Abstract**

There is provided an X-ray utilized compound measuring apparatus in which troublesome tasks required to dispose a measurement object are reduced and the accuracy or the validity of measurements on multiple kinds of measurement can be improved. The X-ray utilized compound measuring apparatus comprises an X-ray generator 10 that outputs X-rays, a reflected-wave detector 12 that detects a reflected wave of the X-rays emitted from the X-ray generator 10 and reflected by a measurement object 21, a transmitted-wave detector 11 that detects a transmitted wave of the X-rays emitted from the X-ray generator 10 and passing through the measurement object 21, and a control unit that controls the X-ray generator 10 to output X-rays and performs computational processing for obtaining measurement values of a plurality of items on the measurement object 21 using a reflected-wave detection signal output from the reflected-wave detector 12 and representing the reflected wave and a transmitted-wave detection signal output from the transmitted-wave detector 11 and representing the transmitted wave and also performs computational processing for component analysis.

## Description

### 1. Filed of the Invention

The present invention relates to X-ray utilized compound measuring apparatus that apply X-rays to an object to be measured to measure the thickness of the measurement object and/or analyze the component of the measurement object.

To measure the thickness of a sheet-like member, such as a film of resin or the like, a paper material, a pulp, or a board, measuring apparatuses that passes X-rays, β rays, or γ rays therethrough are used.

This through-beam type measuring apparatus is configured to emit X-rays or the like from an X-ray emitting unit or the like to an object to be measure (a sample) and detect the X-rays or the like that have passed through the measurement object with a detecting unit to enable, for example, acquisition of a transmission image or observation of cell activity (for example, see Patent Literature 1).

[PTL]
[Patent Literature 1] Japanese Unexamined Patent Application Publication No. 2015-90311

### SUMMARY OF THE INVENTION

Conventional X-ray transmission type measuring apparatuses are capable of measuring the thickness and the areal density of a plate, as described above. However, to measure the moisture content or analyze the component, an apparatus or the like using another measurement principle is required.

If such different measurement principles are used, for example, the deviations or errors quantitatively included in the individual measurement values would differ, making it difficult to evaluate the measurement results. This makes it difficult to obtain an accurate measurement result.

The present invention is made in view of the above problem. Accordingly, it is an object of the present invention to provide a X-ray utilized compound measuring apparatus in which troublesome tasks required to dispose the measurement object are reduced and the accuracy or the validity of measurements on multiple kinds of measurement can be improved.

A X-ray utilized compound measuring apparatus according to the present invention is characterized by including an X-ray generator that outputs X-rays, a reflected-wave detector that detects a reflected wave of the X-rays emitted from the X-ray generator and reflected by a measurement object, a transmitted-wave detector that detects a transmitted wave of the X-rays emitted from the X-ray generator and passing through the measurement object, and a control unit that controls the X-ray generator to output X-rays and performs computational processing for obtaining measurement values of a plurality of items on the measurement object using both a reflected-wave detection signal output from the reflected-wave detector and representing the reflected wave and a transmitted-wave detection signal output from the transmitted-wave detector and representing the transmitted wave and computational processing for component analysis. (Note: A word, "wave" which is used by itself or in a phrase like "reflected wave" means the wave of X-rays.)

The X-ray utilized compound measuring apparatus is characterized in that the X-ray generator outputs the X-rays at 30 keV or less.

The X-ray utilized compound measuring apparatus is characterized by including a moving mechanism that moves the X-ray generator, the reflected-wave detector, and the transmitted-wave detector, the first calibration board for use in calibration of areal density measurement, and the second calibration board including a calibration material for component analysis on a surface of a calibration board for areal density measurement, the calibration board being a different kind of calibration board from the first calibration board. The control unit controls the moving mechanism to cause the X-ray generator, the reflected-wave detector, and the transmitted-wave detector to move to a position where the first calibration board or the second calibration board is disposed and causes X-rays to be applied to the calibration board disposed at the position to obtain the reflected-wave detection signal and the transmitted-wave detection signal. When computing the transmitted-wave detection signal regarding the measurement object, the control unit uses the transmitted-wave detection signal regarding the calibration board, and when computing the reflected-wave detection signal regarding the measurement object, the control unit uses the reflected-wave detection signal regarding the calibration board.

The X-ray utilized compound measuring apparatus is characterized by including a moving mechanism that moves the X-ray generator, the reflected-wave detector, and the transmitted-wave detector, the first calibration board for use in calibration of areal density measurement, the second calibration board including a calibration board for areal density measurement, the calibration board being a different kind of calibration board from the first calibration board, and at least one kind of calibration board for component analysis for use in component analysis of the measurement object. The control unit controls the moving mechanism to cause the X-ray generator, the reflected-wave detector, and the transmitted-wave detector to move to a position where the first calibration board, the second calibration board, or the calibration board for component analysis is disposed, and causes X-rays to be applied to the calibration board disposed at the position to obtain one or both of a transmitted-wave detection signal regarding the calibration board and a reflected-wave detection signal regarding the calibration board. When computing the transmitted-wave detection signal regarding the measurement object, the control unit performs calibration using the transmitted-wave detection signal regarding the calibration board, and when computing the reflected-wave detection signal regarding the measurement object, the control unit performs calibration using the reflected-wave detection signal regarding the calibration board.

The X-ray utilized compound measuring apparatus is characterized in that the reflected-wave detector includes the first reflected-wave detector disposed on one side of an X-ray emitting portion of the X-ray generator and the second reflected-wave detector disposed on another side of the X-ray emitting portion.

The X-ray utilized compound measuring apparatus is characterized by including a radiation guide unit that directs the X-rays emitted from the X-ray generator in a predetermined direction.

According to the present invention, the use of a single measuring apparatus allows multiple kinds of measurement under a certain measurement environment, thereby increasing the accuracy of various measurements and component analysis results.

### BRIEF DESCRIPTION OF THE DRAWINGS

Fig. 1 is a diagram illustrating, in outline, the configuration of an X-ray utilized compound measuring apparatus according to the first embodiment of the present invention;
Fig. 2 is a diagram illustrating, in outline, the configuration of an X-ray utilized compound measuring apparatus according to the second embodiment of the present invention;
Fig. 3 is a diagram illustrating, in outline, the configuration of an X-ray utilized compound measuring apparatus according to the third embodiment of the present invention;
Fig. 4 is a diagram illustrating, in outline, the configuration of an X-ray utilized compound measuring apparatus according to the fourth embodiment of the present invention; and
Fig. 5 is a diagram illustrating, in outline, the configuration of an X-ray utilized compound measuring apparatus according to the fifth embodiment of the present invention.

### DESCRIPTION OF THE PREFERRED EMBODIMENTS

An embodiment of the present invention will be described hereinbelow.

### First Embodiment

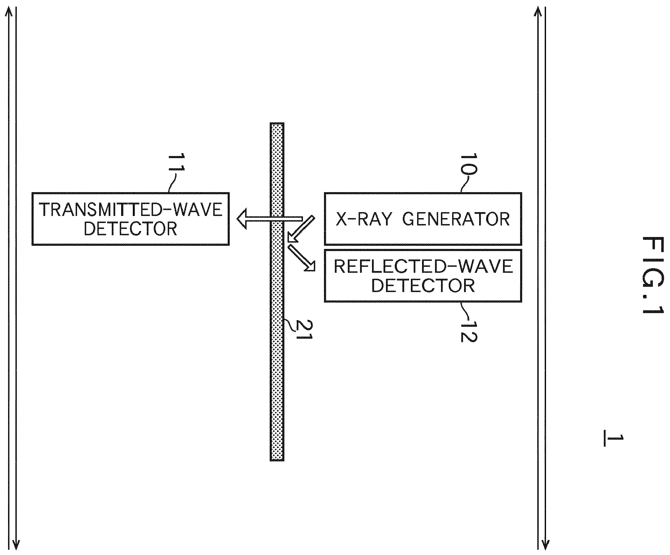

Fig. 1 is a diagram illustrating, in outline, the configuration of an X-ray utilized compound measuring apparatus 1 according to the first embodiment of the present invention. This diagram illustrates, in outline, the arrangement of an X-ray generator 10, a transmitted-wave detector 11, a reflected-wave detector 12 that constitute the X-ray utilized compound measuring apparatus 1 when performing predetermined measurement by applying X-rays to a measurement object 21, illustrating a state in which the measurement object 21 to be measured using these components.

The X-ray generator 10 and the reflected-wave detector 12 are disposed so that an X-ray emitting portion of the X-ray generator 10 and an X-ray detecting portion of the reflected-wave detector 12 are positioned side by side.

The transmitted-wave detector 11 is opposed to the X-ray generator 10, with a certain distance therebetween, so that an X-ray detecting portion of the transmitted-wave detector 11 and the X-ray emitting portion of the X-ray generator 10 are opposed, with a certain distance therebetween so that the measurement object 21 is disposed therein.

The X-ray utilized compound measuring apparatus 1 further includes a moving mechanism (not illustrated) for moving the X-ray generator 10, the reflected-wave detector 12, and the transmitted-wave detector 11.

This moving mechanism is configured to move the X-ray generator 10, the reflected-wave detector 12, and the transmitted-wave detector 11 along the surfaces of the measurement object 21 disposed between the X-ray generator 10 and the transmitted-wave detector 11 as described above.

The moving mechanism of the X-ray utilized compound measuring apparatus 1 illustrated in Fig. 1 is configured to move the X-ray generator 10, the reflected-wave detector 12, and the transmitted-wave detector 11 bi-directionally (in the drawing, in the lateral direction) along the longitudinal direction of the measurement object 21 while keeping the state of the illustrated arrangement.

The X-ray utilized compound measuring apparatus 1 may also be configured to perform scanning measurement on the measurement object 21. In this case, the moving mechanism and so on are configured to repeat reciprocating movement along the surface (the measurement portion or the like) of the measurement object 21 to thoroughly scan the measurement portion.

The X-ray generator 10 has a configuration for emitting X-rays so that a transmitted wave that has passed through the measurement object 21 enters the transmitted-wave detector 11 and so that a reflected wave (a part of Compton scattered wave) reflected by the measurement object 21 enters the X-ray detecting portion of the reflected-wave detector 12.

Specifically, for example, the X-ray generator 10 is configured such that X-rays are emitted from the X-ray emitting portion or the like in a predetermined direction, and the transmitted wave that has passed through the measurement object 21 enters the transmitted-wave detector 11, and the reflected wave (a part of the scattered wave, facing to irradiation side) reflected by the measurement object 21 enters the reflected-wave detector 12.

In other words, the transmitted-wave detector 11 is disposed at a portion where the transmitted wave can be detected, and the reflected-wave detector 12 is disposed at a position where the reflected wave can be detected.

The X-ray generator 10 may include an X-ray emitting portion that emits X-rays in two directions so that, for example, X-rays travel toward the transmitted-wave detector 11 opposed to the X-ray generator 10 and enter the surface of the measurement object 21 at a predetermined incidence angle.

The X-ray generator 10 is configured to output X-rays at 30 keV or less.

The X-ray utilized compound measuring apparatus 1 includes a control unit (not illustrated) constituted by electronic devices, such as a processor and a memory. The X-ray utilized compound measuring apparatus 1 controls the operations of the X-ray generator 10, the moving mechanism, and so on according to signals output from the control unit and inputs signals output from the transmitted-wave detector 11, the reflected-wave detector 12, and so on to the control unit to perform computation, thereby obtaining predetermined measurements or the result of component analysis.

Next, the operation will be described.

In performing measurement on the measurement object 21 using X-rays, when the measurement object 21 is disposed in the X-ray utilized compound measuring apparatus 1, the X-ray generator 10 and the reflected-wave detector 12 are disposed at positions opposed to the measurement object 21. The transmitted-wave detector 11 is disposed at a position opposed to the thus-disposed X-ray generator 10 and on the back of the measurement object 21.

The control unit of the X-ray utilized compound measuring apparatus 1 controls the X-ray generator 10 to output X-rays.

The X-rays emitted from the X-ray generator 10 pass through the measurement object 21 from above to below in the drawing (in the thickness direction of the measurement object 21), and the transmitted wave is detected by the transmitted-wave detector 11.

The transmitted-wave detector 11 outputs a signal representing the detected transmitted wave to the control unit.

The control unit performs predetermined computational processing using the signal representing the transmitted wave to obtain the first measurement value on, for example, the first measurement item (a measurement item using the transmitted wave) on the measurement object 21.

The X-rays emitted from the X-ray generator 10, described above, are also reflected by the surface of the measurement object 21 or at a predetermined depth from the surface, and a part of Compton scattered wave generated at that time (the reflected wave described above) is detected by the reflected-wave detector 12. The reflected wave, described later, is a part of Compton scattered wave.

The reflected-wave detector 12 outputs a signal representing the detected reflected wave to the control unit.

The control unit performs predetermined computational processing using the signal representing the reflected wave to obtain the second measurement value on, for example, the second measurement item (a measurement item using the reflected wave) on the measurement object 21. Otherwise, the control unit performs predetermined computational processing using the signal representing the reflected wave to obtain an analysis result of the component forming the measurement object 21.

For measurement at any position of the measurement object 21, the order of performing the computational processing using the signal representing the transmitted wave and the computational processing using the signal representing the reflected wave is not limited to the order described above. An operation for obtaining only one of the measurement values or the analysis results may be performed.

The order of computational processing, the operation for obtaining only one measurement value or analysis result, and the emission of X-rays for detecting a transmitted wave and a reflected wave described above may also be applied to the X-ray utilized compound measuring apparatuses described later. The X-ray utilized compound measuring apparatuses have a configuration for performing the operations.

The control unit of the X-ray utilized compound measuring apparatus 1 obtains the first measurement value and the second measurement value (or an analysis result) at any portion of the measurement object 21, thereafter controls the moving mechanism to move the X-ray generator 10, the transmitted-wave detector 11, the reflected-wave detector 12, and so on so that they are opposed to another portion of the measurement object 21, and performs X-ray emission and detection, as described above, on the portion of the measurement object 21 to obtain, for example, the first measurement value and the second measurement value (or an analysis result). Thus, the measurement object 21 may be scanned by moving the position of the measurement portion of the measurement object 21 in sequence to perform desired measurement (component analysis) using X-rays at each position.

The configuration and operation for scanning the measurement object 21 to perform measurement and so on also apply to the X-ray utilized compound measuring apparatus described later and may be performed in the same way.

### Second Embodiment

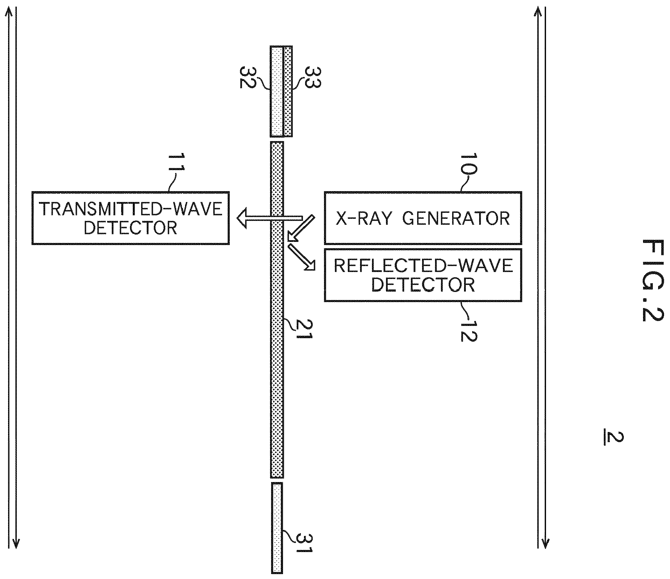

Fig. 2 is a diagram illustrating, in outline, the configuration of an X-ray utilized compound measuring apparatus 2 according to the second embodiment of the present invention.

This diagram illustrates, in outline, the configuration of an X-ray generator 10, a transmitted-wave detector 11, a reflected-wave detector 12, the first calibration board 31, and the second calibration board 32 that constitute the X-ray utilized compound measuring apparatus 2 in performing predetermined measurement by applying X-rays to the measurement object 21, illustrating a state in which the measurement object 21 to be measured using these components.

The X-ray utilized compound measuring apparatus 2 in Fig. 2 is provided with the X-ray generator 10, the transmitted-wave detector 11, the reflected-wave detector 12, and a moving mechanism (not illustrated) for moving the above components, like the apparatus illustrated in Fig. 1. The above components are configured so as to be equivalent or correspond to those in the X-ray utilized compound measuring apparatus 1.

The X-ray utilized compound measuring apparatus 2 is provided with the first calibration board 31 and the second calibration board 32 secured in the moving range of the X-ray generator 10, the transmitted-wave detector 11, the reflected-wave detector 12, and so on that are moved by the moving mechanism described above.

Specifically, the measurement object 21, the first calibration board 31, and the second calibration board 32 are aligned in the above moving range, and these calibration boards are individually irradiated with X-rays under the same conditions as for the measurement object 21 to detect the transmitted wave and the reflected wave of the X-rays.

In this case, the X-ray utilized compound measuring apparatus 2 that is configured to perform, for example, measurement of areal density and component analysis, will be described. The first calibration board 31 is used, for example, to measure the areal density of the measurement object 21 by detecting a transmitted wave and has substantially the same X-ray transmission characteristics as those of the measurement object 21.

The second calibration board 32 is a (different kind of) calibration board having different transmission characteristics from those of the first calibration board 31, to which a calibration material 33 for component analysis for use in component analysis by reflecting X-rays is fixed by, for example, bonding, lamination, coating, or another processing.

This second calibration board 32 is disposed and secured such that a surface to which the calibration material 33 for component analysis is fixed is opposed to the X-ray generator 10 or the reflected-wave detector 12.

The calibration boards provided to the X-ray utilized compound measuring apparatus 2 and the X-ray utilized compound measuring apparatus described later are not limited to the plate-like members but may be sheets, films, or other materials suitable for the measurement object 21.

Next, the operation will be described.

Redundant descriptions of operations similar to the operations of the X-ray utilized compound measuring apparatus 1 illustrated in Fig. 1 will be omitted here.

The X-ray utilized compound measuring apparatus 2 is configured, for example, to detect the transmitted wave of X-rays to measure the areal density of the measurement object 21 and to measure the reflected wave of the X-rays to analyze the component of the measurement object 21.

The control unit of the X-ray utilized compound measuring apparatus 2 controls the moving mechanism to move the X-ray generator 10 to a desired position, causes the X-ray generator 10 to emit X-rays to the measurement object 21, and causes the transmitted-wave detector 11 to detect a transmitted wave that has passed through the measurement object 21.

A transmitted-wave measurement signal (a transmitted-wave detection signal regarding the measurement object) output from the transmitted-wave detector 11 and representing the transmitted wave is stored in, for example, a memory of the control unit.

When the control unit causes the X-ray generator 10 to emit X-rays to the measurement object 21, as described above, the control unit causes the reflected-wave detector 12 to detect a reflected wave reflected by the surface or the like of the measurement object 21 and stores a reflected-wave measurement signal (a reflected-wave detection signal regarding the measurement object) output from the reflected-wave detector 12 and representing the reflected wave in, for example, the memory described above.

Next, the control unit controls the moving mechanism to move the X-ray generator 10, the transmitted-wave detector 11, the reflected-wave detector 12, and so on to positions opposed to the first calibration board 31.

At these positions, the control unit causes the X-ray generator 10 to emit X-rays to the first calibration board 31 and causes the transmitted-wave detector 11 to detect a transmitted wave that has passed through the first calibration board 31.

The control unit stores the first transmitted-wave calibration signal representing the transmitted wave that has passed through the first calibration board 31 (a transmitted-wave detection signal regarding the calibration board), which is output from the transmitted-wave detector 11, in, for example, the memory described above. The control unit may also cause the reflected-wave detector 12 to detect a reflected wave from the first calibration board 31 and stores the detection signal in, for example, the memory described above.

Next, the control unit controls the moving mechanism to move the X-ray generator 10, the transmitted-wave detector 11, the reflected-wave detector 12, and so on to a position opposed to the second calibration board 32 or the calibration material 33 for component analysis. At this position, the control unit causes the X-ray generator 10 to emit X-rays to the second calibration board 32 and so on, causes the transmitted-wave detector 11 to detect a transmitted wave that has passed through the calibration material 33 for component analysis and the second calibration board 32, and causes the reflected-wave detector 12 to detect the reflected wave reflected by the calibration material 33 for component analysis.

The control unit stores the second transmitted-wave calibration signal (a transmitted-wave detection signal regarding the calibration board) output from the transmitted-wave detector 11 and representing the transmitted wave that has passed through the second calibration board 32 and so on, and a reflected-wave calibration signal (a reflected-wave detection signal regarding the calibration board) output from the reflected-wave detector 12 and representing the reflected wave reflected by the second calibration board 32 or the calibration material 33 for component analysis, in, for example, the memory described above.

The control unit performs computational processing for obtaining the surface-density measurement value using the transmitted-wave measurement signal stored in the memory or the like described above, including calibration processing using the first transmitted-wave calibration signal and the second transmitted-wave calibration signal stored in the memory or the like described above.

The control unit further performs computational processing for analyzing the component forming the measurement object 21 using the reflected-wave measurement signal stored in the memory or the like described above, including calibration processing using the reflected-wave detection signal (the reflected-wave calibration signal regarding the calibration board) stored in the memory or the like described above.

When calibrating the transmitted-wave measurement signal, the control unit may perform computational processing (calibration processing) using only one of the first transmitted-wave calibration signal and the second transmitted-wave calibration signal.

The order of performing the processing operation for applying X-rays to the measurement object 21 to obtain the areal density from the detected transmitted wave and the processing operation for determining the component analysis result from the detected reflected wave is not limited to the order described above.

### Third Embodiment

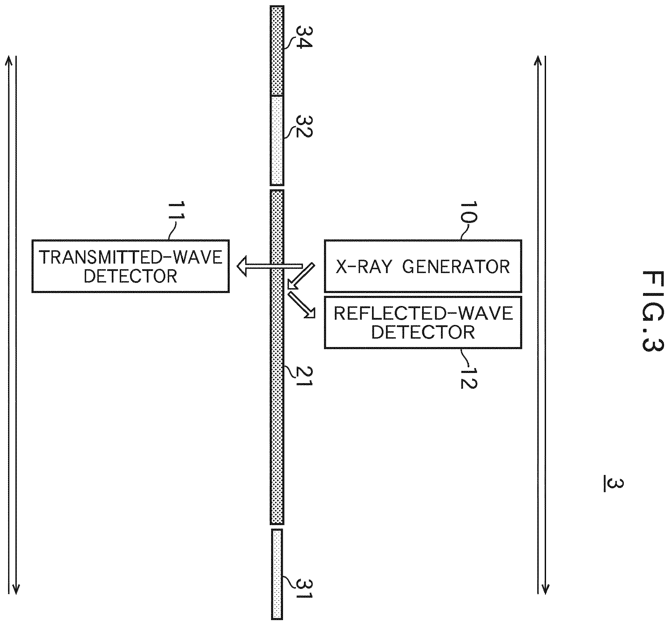

Fig. 3 is a diagram illustrating, in outline, the configuration of an X-ray utilized compound measuring apparatus 3 according to the third embodiment of the present invention.

This diagram illustrates, in outline, the arrangement of an X-ray generator 10, a transmitted-wave detector 11, a reflected-wave detector 12, the first calibration board 31, the second calibration board 32, and a calibration board 34 for component analysis that constitute the X-ray utilized compound measuring apparatus 3 in performing predetermined measurement by applying X-rays to the measurement object 21, illustrating a state in which the measurement object 21 to be measured using these components.

The X-ray utilized compound measuring apparatus 3 in Fig. 3 comprises the X-ray generator 10, the transmitted-wave detector 11, the reflected-wave detector 12, and a moving mechanism (not illustrated) for moving the above components, like the apparatus illustrated in Fig. 1. The above components are configured so as to be equivalent or correspond to those in the X-ray utilized compound measuring apparatus 1 and so on.

The X-ray utilized compound measuring apparatus 3 includes the first calibration board 31, the second calibration board 32, and the calibration board 34 for component analysis secured in the moving range of the X-ray generator 10, the transmitted-wave detector 11, the reflected-wave detector 12, and so on which are moved by the moving mechanism described above. The second calibration board 32 of the X-ray utilized compound measuring apparatus 3 is not secured the surface thereof the calibration material 33 for component analysis or the like

Specifically, the X-ray utilized compound measuring apparatus 3 is configured such that the measurement object 21, the first calibration board 31, the second calibration board 32, and the calibration board 34 for component analysis are aligned in the above moving range, and these calibration boards are individually irradiated with X-rays under the same conditions as for the measurement object 21 to detect the transmitted wave and the reflected wave of the X-rays.

In this case, the X-ray utilized compound measuring apparatus 3 that is configured to perform, for example, measurement of areal density and component analysis, will be described.

The X-ray generator 10, the transmitted-wave detector 11, the reflected-wave detector 12, and the first calibration board 31 provided in the X-ray utilized compound measuring apparatus 3 are the same as those of the X-ray utilized compound measuring apparatus 2.

The second calibration board 32 of the X-ray utilized compound measuring apparatus 3 is a (different kind of) calibration board having a different X-ray transmission characteristic from that of the first calibration board 31 and is aligned with the calibration board 34 for component analysis.

The calibration board 34 for component analysis is provided to perform calibration processing in component analysis by reflecting X-rays and has a predetermined X-ray reflection characteristic and is disposed so that a surface of the calibration board 34 for component analysis is opposed to the reflected-wave detector 12 and the X-ray generator 10.

A different kind of calibration board for component analysis may be added to constitute the calibration board 34 for component analysis. That is, the X-ray utilized compound measuring apparatus 3 comprises at least one kind of calibration board 34 for component analysis and may be provided with plural kinds of calibration board for component analysis.

Next, the operation will be described.

Redundant descriptions of operations similar to the operations of the X-ray utilized compound measuring apparatus 1 illustrated in Fig. 1 and the X-ray utilized compound measuring apparatus 2 illustrated in Fig. 2 will be omitted.

The control unit of the X-ray utilized compound measuring apparatus 3 controls the moving mechanism to move the X-ray generator 10 to a desired position, causes the X-ray generator 10 to emit X-rays to the measurement object 21, and causes the transmitted-wave detector 11 to detect a transmitted wave that has passed through the measurement object 21.

The control unit stores the transmitted-wave measurement signal (the transmitted-wave detection signal regarding the measurement object) output from the transmitted-wave detector 11 and representing the transmitted wave in, for example, a memory of the control unit.

When the control unit causes X-rays to be emitted to the measurement object 21 at this position, the control unit causes the reflected-wave detector 12 to detect a reflected wave reflected by the measurement object 21 and stores a reflected-wave measurement signal (a reflected-wave detection signal) output from the reflected-wave detector 12 and representing the reflected wave in a memory or the like.

Next, the control unit controls the moving mechanism to move the X-ray generator 10, the transmitted-wave detector 11, and so on to positions opposed to the first calibration board 31. At these positions, the control unit causes the X-ray generator 10 to emit X-rays to the first calibration board 31 and causes the transmitted-wave detector 11 to detect a transmitted wave that has passed through the first calibration board 31.

The control unit stores a signal (the first transmitted-wave calibration signal) obtained from the transmitted-wave detector 11 and representing the transmitted wave that has passed through the first calibration board 31, in, for example, the memory described above.

Next, the control unit controls the moving mechanism to move the X-ray generator 10, the transmitted-wave detector 11, and so on to a position opposed to the second calibration board 32. At this position, the control unit causes the X-ray generator 10 to emit X-rays to the second calibration board 32, causes the transmission detector 11 to detect a transmitted wave that has passed through the second calibration board 32, and stores a signal (the second transmitted-wave calibration signal) obtained from the transmitted-wave detector 11 and representing the transmitted wave that has passed through the second calibration board 32, in the memory or the like, described above.

When determining the areal density of the measurement object 21 from the transmitted-wave measurement signal stored in the memory or the like, the control unit performs computational processing including calibration processing using the first transmitted-wave calibration signal and the second transmitted-wave calibration signal stored in the memory or the like.

When determining the areal density of the measurement object 21, the control unit may perform the calibration processing using one of the first transmitted-wave calibration signal and the second transmitted-wave calibration signal.

The control unit controls the moving mechanism to move the X-ray generator 10, the transmitted-wave detector 11, the reflected-wave detector 12, and so on to positions opposed to the calibration board 34 for component analysis. At these positions, the control unit causes the X-ray generator 10 to emit X-rays to the calibration board 34 for component analysis and causes the reflected-wave detector 12 to detect a reflected wave of the X-rays reflected by the calibration board 34 for component analysis. In this case, the control unit may cause the transmitted-wave detector 11 to detect a transmitted wave to obtain a transmitted-wave detection signal regarding the calibration board indicating the detection result and may calibrate the transmitted wave that has passed through the measurement object 21 (the transmitted-wave detection signal regarding the measurement object, stored in the memory or the like) described above, using the transmitted-wave detection signal regarding the calibration board. Comparing the result of calibration of the transmitted wave and the result of calibration of the reflected wave using the reflected-wave calibration signal described below allows higher-accuracy calibration for component analysis.

The control unit uses the reflected-wave calibration signal (the reflected-wave detection signal regarding the calibration board) output from the reflected-wave detector 12 when detecting the reflected wave reflected by the calibration board 34 for component analysis to calibrate the reflected-wave measurement signal stored in the memory described above or the like. The control unit further performs computational processing for analyzing the component of the measurement object 21 using the reflected-wave measurement signal, including the calibration processing.

Otherwise, the control unit may perform computational processing for analyzing the component of the measurement object 21 using the reflected-wave calibration result and the transmitted-wave calibration result.

The order of performing the processing operation for applying X-rays to the measurement object 21 and determining the areal density from the detected transmitted wave and the processing operation for determining the result of component analysis from the detected reflected wave or from both of the reflected wave and the transmitted wave is not limited to the order described above.

### Fourth Embodiment

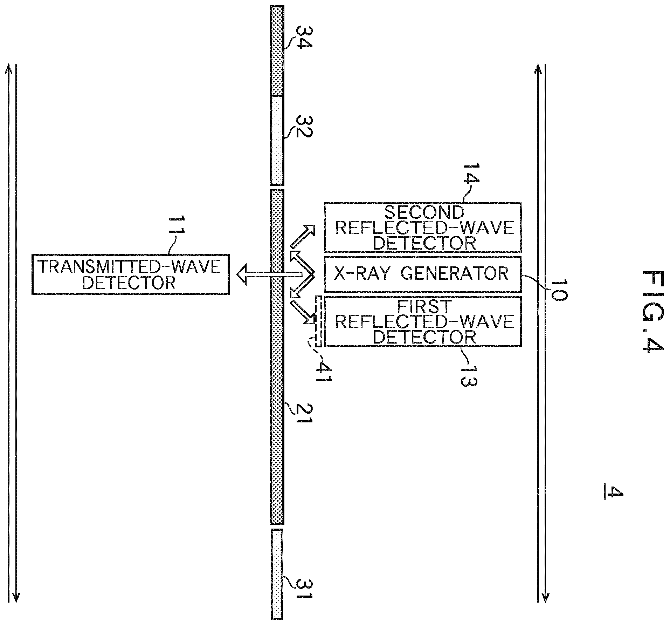

Fig. 4 is a diagram illustrating, in outline, the configuration of an X-ray utilized compound measuring apparatus 4 according to the fourth embodiment of the present invention. This diagram illustrates, in outline, the arrangement of an X-ray generator 10, a transmitted-wave detector 11, a first reflected-wave detector 13, a second reflected-wave detector 14, the first calibration board 31, the second calibration board 32, a calibration board 34 for component analysis, and a filter 41 that constitute the X-ray utilized compound measuring apparatus 4 in performing predetermined measurement by applying X-rays to the measurement object 21, illustrating a state in which the measurement object 21 to be measured using these components.

The X-ray utilized compound measuring apparatus 4 comprises a moving mechanism (not illustrated) for moving the X-ray generator 10, the transmitted-wave detector 11, the first reflected-wave detector 13, the filter 41, the second reflected-wave detector 14, and so on.

The X-ray utilized compound measuring apparatus 4 comprises the first calibration board 31, the second calibration board 32, and the calibration board 34 for component analysis in the moving range of the X-ray generator 10, the transmitted-wave detector 11, the first reflected-wave detector 13, the filter 41, and the second reflected-wave detector 14 which are moved by the moving mechanism described above, like the apparatus illustrated in Fig. 3.

That is, the X-ray utilized compound measuring apparatus 4 is configured in the same manner as the X-ray utilized compound measuring apparatus 3 in Fig. 3 except that the first reflected-wave detector 13 and the second reflected-wave detector 14 are provided in place of the reflected-wave detector 12. Here, redundant descriptions of components of the X-ray utilized compound measuring apparatus 4 similar or corresponding to the those of the X-ray utilized compound measuring apparatus 3 will be omitted.

The first reflected-wave detector 13 and the second reflected-wave detector 14 are disposed, for example, on both sides of the X-ray generator 10, so that the X-ray detecting portions thereof are aligned with the X-ray emitting portion of the X-ray generator 10.

For example, the filter 41 is disposed on the X-ray detecting portion of the first reflected-wave detector 13. The filter 41 is an X-ray filter that allows X-rays (electromagnetic waves) with a predetermined wavelength to pass through and has filtering characteristics corresponding to the kind of the measurement object 21, the position of the portion for component analysis (the depth from the surface), or the like. The filter 41 may be attached or detached freely according to the object of measurement.

The first reflected-wave detector 13 and the second reflected-wave detector 14 have, for example, the same configuration and the same X-ray detection characteristic but may have a different X-ray detection characteristic.

The X-ray generator 10 of the X-ray utilized compound measuring apparatus 4 is configured to output X-rays (whose emission direction and so on are appropriately set) so that, when applying X-rays to the measurement object 21 opposed to the X-ray emitting portion of the X-ray generator 10, a transmitted wave that has passed through the measurement object 21 can be detected by the transmitted-wave detector 11 and a reflected wave reflected by the measurement object 21 can be detected by the first reflected-wave detector 13 and the second reflected-wave detector 14.

In other words, the first reflected-wave detector 13 and the second reflected-wave detector 14 are disposed at positions where the reflected wave of the X-rays from the X-ray generator 10, reflected by the measurement object 21, can be detected, and the transmitted-wave detector 11 is disposed at a position where the transmitted wave of the X-rays from the X-ray generator 10, and passing through the measurement object 21, can be detected.

The X-ray utilized compound measuring apparatus 4 comprises a control unit (not illustrated) that is configured substantially in the same manner as the control units of the X-ray utilized compound measuring apparatus 1 to 3 and is configured to obtain signals output from the transmitted-wave detector 11, the first reflected-wave detector 13, and the second reflected-wave detector 14 to perform computational processing for obtaining a measurement value and the result of component analysis using the signals.

In the X-ray utilized compound measuring apparatus 4, the operation of each component is controlled by the control unit. The X-ray utilized compound measuring apparatus 4 operates almost in the same manner as the X-ray utilized compound measuring apparatus 3 and detects reflected waves from the measurement object 21, the calibration board 34 for component analysis, and so on using the first reflected-wave detector 13 and the second reflected-wave detector 14. Otherwise, the X-ray utilized compound measuring apparatus 4 may detect the reflected waves using one of the first reflected-wave detector 13 and the second reflected-wave detector 14, and the control unit may perform computational processing using a signal output from the reflected-wave detector.

The X-ray utilized compound measuring apparatus 4 described here comprises two reflected-wave detectors (the first reflected-wave detector 13 and the second reflected-wave detector 14) instead of the reflected-wave detector 12 of the X-ray utilized compound measuring apparatus 3, as described above. Alternatively, the X-ray utilized compound measuring apparatus 1 in Fig. 1 or the X-ray utilized compound measuring apparatus 2 in Fig. 2 may comprise the two reflected-wave detectors described above instead of the reflected-wave detector 12. Alternatively, one or both of the reflected-wave detectors may comprise, for example, the filter 41, and detect reflected waves from the measurement object 21 and the calibration boards, and the reflected waves may be used in computational processing for obtaining the result of component analysis.

### Fifth Embodiment

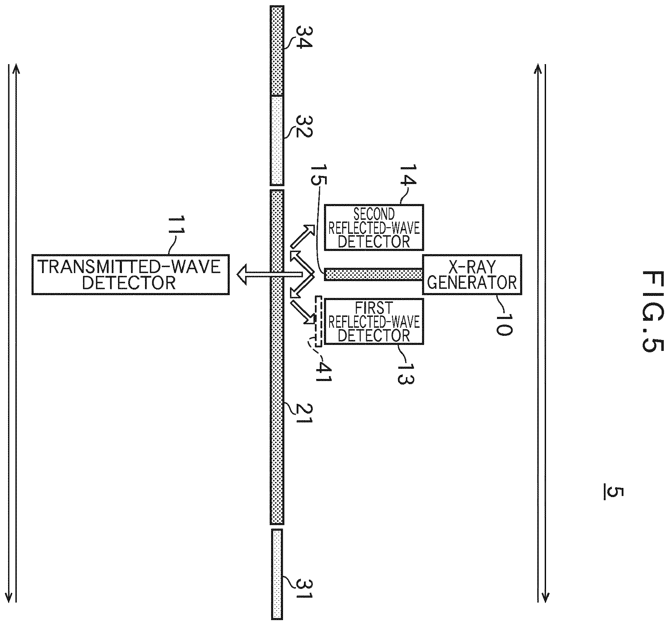

Fig. 5 is a diagram illustrating, in outline, the configuration of an X-ray utilized compound measuring apparatus 5 according to the fifth embodiment of the present invention. The X-ray utilized compound measuring apparatus 5 includes a radiation guide 15 on the X-ray generator 10 of the X-ray utilized compound measuring apparatus 4 illustrated in Fig. 4. The X-ray utilized compound measuring apparatus 5 is configured in the same manner as the X-ray reflective-type measuring apparatus 4 in Fig. 4 except the radiation guide 15 and operates in the same way. Here, redundant descriptions of configurations and operations similar to those illustrated in Fig. 4 will be omitted.

The radiation guide 15 may be made of various materials with absorptive or reflective properties for X-rays and may have various shapes according to the desired emission form. For example, the radiation guide 15 may be configured to diverge, or in contrast, narrow down the emitted X-rays, or alternatively, to be angled for emission to the measurement object 21.

The radiation guide 15 is used to direct the X-rays emitted from the X-ray emitting portion of the X-ray generator 10 to a predetermined direction with the above configuration and may be provided in the X-ray generators 10 illustrated in Figs. 1 to 3.

The present invention may be used in measurement in manufacturing processes, such as chemical product manufacturing, paper manufacturing, steel manufacturing, nonferrous manufacturing, construction material manufacturing, tea manufacturing, food manufacturing, and tobacco manufacturing. Specifically, the present invention may be used in measurement of the thickness of a sheet such as a pulp, a film, or a board, or a block, measurement of the moisture content of particulate matter, measurement of the amount of liquid or powder applied, component analysis of coating substances, measurement of moisture content in tea leaves, tobacco, foodstuffs, and so on.

Furthermore, the present invention enables areal density measurement and component analysis of the measurement object 21 using the same apparatus. This allows, for example, in the application process of production line, measurement of the thickness of coating, measurement of moisture content, component analysis of contained substances such as lithium, measurement of the coating amount of the contained substances to be performed uniformly.

In the coating process, the present invention allows detecting layers having different properties from two or three layers, enabling coating control of steel coating, thickness control of an intermediate layer of a composite steel plate, such as a vibration damping steel plate, and high-precision measurement of moisture.

Furthermore, since the present invention detects a transmitted wave and a reflected wave X-rays emitted from the same X-ray generator 10, the operational relationship among the components can be analyzed in detail. Furthermore, the use of the X-ray filter 41 allows various kinds of measurement.

## Claims

1. An X-ray utilized compound measuring apparatus comprising:
an X-ray generator that outputs X-rays;
a reflected-wave detector that detects a reflected wave of the X-rays emitted from the X-ray generator and reflected by a measurement object;
a transmitted-wave detector that detects a transmitted wave of the X-rays emitted from the X-ray generator and passing through the measurement object; and
a control unit that controls the X-ray generator to output X-rays and performs computational processing for obtaining measurement values of a plurality of items on the measurement object using a reflected-wave detection signal output from the reflected-wave detector and representing the reflected wave and a transmitted-wave detection signal output from the transmitted-wave detector and representing the transmitted wave and computational processing for component analysis.

2. The X-ray utilized compound measuring apparatus according to Claim 1, wherein the X-ray generator outputs the X-rays at 30 keV or less.

3. The X-ray utilized compound measuring apparatus according to Claim 1 or 2, comprising:
a moving mechanism that moves the X-ray generator, the reflected-wave detector, and the transmitted-wave detector;
the first calibration board for use in calibration of areal density measurement; and
the second calibration board including a calibration material for component analysis on a surface of a calibration board for areal density measurement, the calibration board being a different kind of calibration board from the first calibration board,
wherein the control unit controls the moving mechanism to cause the X-ray generator, the reflected-wave detector, and the transmitted-wave detector to move to a position where the first calibration board or the second calibration board is disposed and causes X-rays to be applied to the calibration board disposed at the position to obtain the reflected-wave detection signal and the transmitted-wave detection signal, and
wherein, when computing the transmitted-wave detection signal regarding the measurement object, the control unit uses the transmitted-wave detection signal regarding the calibration board, and when computing the reflected-wave detection signal regarding the measurement object, the control unit uses the reflected-wave detection signal regarding the calibration board.

4. The X-ray utilized compound measuring apparatus according to Claim 1 or 2, comprising:
a moving mechanism that moves the X-ray generator, the reflected-wave detector, and the transmitted-wave detector;
the first calibration board for use in calibration of areal density measurement;
the second calibration board including a calibration board for areal density measurement, the calibration board being a different kind of calibration board from the first calibration board; and
at least one kind of calibration board for component analysis for use in component analysis of the measurement object,
wherein the control unit controls the moving mechanism to cause the X-ray generator, the reflected-wave detector, and the transmitted-wave detector to move to a position where the first calibration board, the second calibration board, or the calibration board for component analysis is disposed, and causes X-rays to be applied to the calibration board disposed at the position to obtain one or both of a transmitted-wave detection signal regarding the calibration board and a reflected-wave detection signal regarding the calibration board, and
wherein, when computing the transmitted-wave detection signal regarding the measurement object, the control unit performs calibration using the transmitted-wave detection signal regarding the calibration board, and when computing the reflected-wave detection signal regarding the measurement object, the control unit performs calibration using the reflected-wave detection signal regarding the calibration board.

5. The X-ray utilized compound measuring apparatus according to any one of Claims 1 to 4, wherein
the reflected-wave detector comprises a first reflected-wave detector disposed on one side of an X-ray emitting portion of the X-ray generator and a second reflected-wave detector disposed on another side of the X-ray emitting portion.

6. The X-ray utilized compound measuring apparatus according to any one of Claims 1 to 5, comprising
a radiation guide unit that directs the X-rays emitted from the X-ray generator to a predetermined direction.
